# EUROPEAN PATENT SPECIFICATION

(11) **EP 1 678 881 B1**
(45) Date of publication and mention of the grant of the patent: **01.05.2013**
(21) Application number: 04794757.7
(22) Date of filing: 13.10.2004
(51) Int. Cl.: H04W 88/04, H04W 52/02, H04W 52/04, H04W 52/24, H04W 52/48, H04B 7/212

(54) **LINK MARGIN NOTIFICATION USING RETURN FRAME**
VERBINDUNGSRESERVEBENACHRICHTIGUNG DURCH VERWENDUNG EINES RÜCKRAHMENS
NOTIFICATION DE MARGE DE LIAISON PAR TRAME DE RETOUR

(30) Priority: 31.10.2003 US 515701 P; 30.06.2004 US 880366; 30.06.2004 US 880370; 30.06.2004 US 880367; 30.06.2004 US 880325
(43) Date of publication of application: 12.07.2006
(73) Proprietor: Xocyst Transfer AG L.L.C., Wilmington, DE 19808 (US)
(72) Inventor: WENTINK, Menzo, NL-3511 AB Utrecht (NL)
(74) Representative: Kazi, Ilya
(86) International application number: PCT/US2004/033487
(87) International publication number: WO 2005/046134

(56) References cited:
- DE-A1- 10 228 342
- US-A1- 2002 168 993
- US-A1- 2002 172 186

## Description

### FIELD OF THE INVENTION

The present invention relates generally to power management in wireless networks and more particularly to minimizing the transmission power used by a wireless device.

### BACKGROUND OF THE INVENTION

Various wireless standards, such as Institute of Electrical and Electronics Engineers (IEEE) standards 802.11a/b/c/d/e/f/g/h/i/j/k/ (referred to collectively as IEEE 802.11), provide for wireless connectivity between wireless devices, such as, for example, between a wireless station and an access point connected to an infrastructure network. These wireless standards typically provide processes for managing the power consumption of the wireless devices in an attempt to minimize the power consumed by the wireless devices, which generally are battery powered and therefore have a limited supply of power.

One technique frequently used to minimize the power consumption of a wireless device includes increasing the transmission rate (also referred to as the PHY rate) of the wireless device. It will be appreciated that increasing the transmission rate reduces the power consumption as the time needed to transmit information is reduced, thereby reducing the duration that the antenna of the wireless device is active while transmitting the signal representative of the information. However, the maximum transmission rate supportable between wireless devices may be limited for any number of reasons, such as, for example, the distance between wireless devices, the presence of noise or other interference, the individual capabilities of the wireless devices, and the like.

In addition to, or instead of, implementing the maximum supportable transmission between wireless devices, a reduction in the transmit power used by a wireless device may be performed to further reduce the power consumption of the wireless device. The degree to which the transmit power of a transmitting wireless station may be reduced generally is related to the link margin of a receiving wireless device, where the link margin typically represents a ratio of the actual received signal power to the minimum received signal power desired or acceptable by the receiving station. Thus, the transmitting station, in theory, could reduce its transmit power by an amount up to the link margin of the receiving wireless device without violating the minimum received signal power requirement of the receiving wireless device. To illustrate, assuming that a receiving wireless station receives a frame at a particular transmission rate with a signal-to-noise ratio (SNR) of 25 decibels (dB) and further assuming that the receiving wireless station is formatted to require a minimum SNR of 12 dB for the particular transmission rate. From these values, the link margin for the receiving wireless station may be calculated as 13 dB (25 dB - 12 dB). Therefore, in this example, the transmitting wireless device could reduce its transmit power by up to 13 dB while still transmitting with enough power to satisfy the minimum requirements of the receiving wireless device.

While the reduction of transmit power commensurate with the link margin of a receiving wireless device can significantly reduce power consumption by a transmitting wireless device, conventional wireless devices typically transmit at the maximum power level permitted by the characteristics of the device or as permitted by regulation (e.g., radio power transmission regulations promulgated by the Federal Communications Commission) because they are unaware of the link margin of the receiving wireless device. As a result, excessive power is consumed as the transmitting wireless station transmits information at a transmit power significantly higher than would otherwise be necessary.
US Patent Pub. No. 2002/0172186 (Larsson) discloses a method for closed loop link adjustment based on a Request to Send-Clear to Send (RTS-CTS) channel access scheme. In response to receiving an RTS frame, a receiving station may transmit a CTS frame including a power adjustment directive that directs the transmitting station to adjust a transmit power to a particular power level for any subsequent DATA frame (including, for example, full power). A pyramidal power transmit structure is disclosed in Figure 18 that varies allowed power transmit directive ranges depending on the type of frame (Beacon, RTS/CTS, or DATA frame, for example).

Accordingly, techniques for minimizing the transmit power of a transmitting wireless device in view of the link margin of a receiving wireless device would be advantageous.

### SUMMARY OF THE INVENTION

The present invention mitigates or solves the above-identified limitations in known solutions, as well as other unspecified deficiencies in known solutions. A number of advantages associated with the present invention are readily evident to those skilled in the art, including economy of design and resources, transparent operation, cost savings, etc.

The present invention is directed to methods for minimizing of transmit power according to independent claims 1 and 15 and to the corresponding wireless devices according to the independent claims 25 and 32.

Still further features and advantages of the present invention are identified in the ensuing description, with reference to the drawings identified below.

### BRIEF DESCRIPTION OF THE DRAWINGS

The purpose and advantages of the present invention will be apparent to those of ordinary skill in the art from the following detailed description in conjunction with the appended drawings in which like reference characters are used to indicate like elements, and in which:

Figure 1 is a schematic diagram illustrating an exemplary wireless system in which various power management techniques may be advantageously implemented in accordance with at least one embodiment of the present invention.

Figure 2 is a schematic diagram illustrating an exemplary transmitting wireless device and an exemplary receiving wireless device in accordance with at least one embodiment of the present invention.

Figure 3 is a flow diagram illustrating exemplary methods of operation of the exemplary wireless devices of Figure 2 in accordance with at least one embodiment of the present invention.

### DETAILED DESCRIPTION OF THE INVENTION

The following description is intended to convey a thorough understanding of the present invention by providing a number of specific embodiments and details involving the minimization of the transmit power used by a wireless station. It is understood, however, that the present invention is not limited to these specific embodiments and details, which are exemplary only. It is further understood that one possessing ordinary skill in the art, in light of known systems and methods, would appreciate the use of the invention for its intended purposes and benefits in any number of alternative embodiments, depending upon specific design and other needs.

For ease of illustration, the various techniques of the present invention are discussed below in the context of IEEE 802.11-based wireless networking. However, those skilled in the art, using the teachings provided herein, may advantageously implement the disclosed techniques in other wireless networks. Accordingly, reference to techniques and components specific to IEEE 802.11, such as an 802.11-specific frame format, applies also to the equivalent technique or component in other wireless network standards unless otherwise noted.

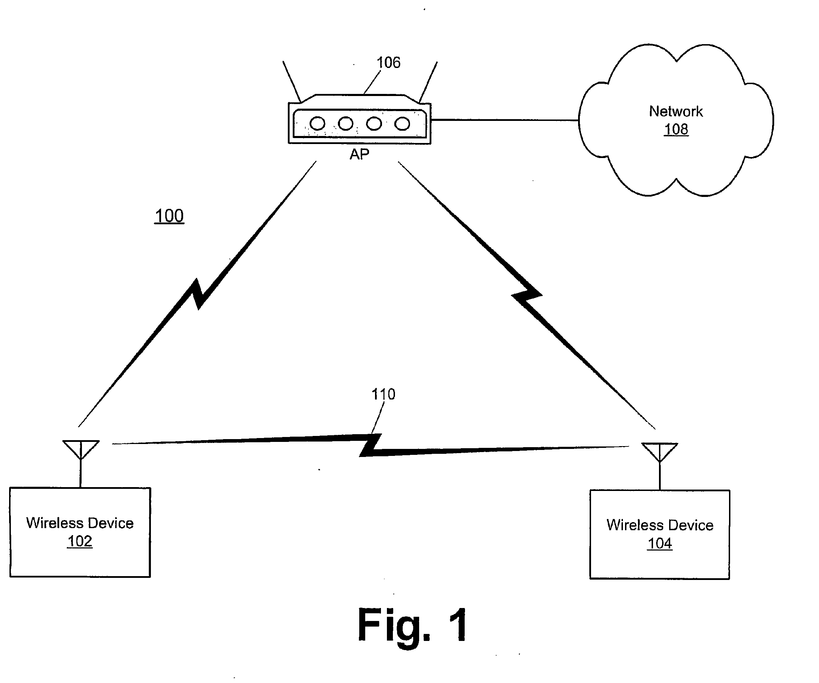

Referring now to Figure 1, an exemplary system 100 employing one or more power saving techniques disclosed herein is illustrated in accordance with at least one embodiment of the present invention. System 100 incorporates a general wireless network topology wherein one or more wireless devices (e.g., wireless devices 102 and 104) are associated with at least one access point 106. The wireless devices 102 and 104 include devices enabled to communicate wirelessly using one or more protocols. Such protocols may include, for example, the IEEE 802.11 protocols (802.11a/b/e/g/i), HiperLAN, etc. Examples of wireless-enabled devices may include notebook (or "laptop") computers, handheld computers, desktop computers, workstations, servers, portable digital assistants (PDAs), cellular phones, etc.

The access point 106 may be connected to an infrastructure network 108 or other network, such as, for example, the Internet, a local area network (LAN), a wide area network (WAN), and the like. Thus, wireless devices 102 and 104 may communicate with one or more networked devices on an infrastructure network via the access point 106. Moreover, the wireless devices 102 and 104 may communicate with each other via the access point 106 or via a wireless direct link 110 between the devices 104 and 106. Exemplary techniques for establishing and maintaining the wireless direct link 110 are described, for example, in U.S. Pat. Application No. 60/515,701, the entirety of which is incorporated by reference herein.

In conventional systems, wireless devices typically are configured to transmit at the maximum permissible transmit power to help ensure that the receiving device (either an access point or another wireless device) accurately receives the transmitted signal. This frequently results in excessive power consumption by the transmitting wireless device because the maximum permissible transmit power often is substantially more than sufficient to ensure that the receiving device receives the transmitted signal intact. This excessive power consumption can lead to the premature draining of battery power supplies, the premature degradation of the transceiver due to excessive heat, and increased energy costs.

Accordingly, the present invention provides various techniques for reducing the transmit power of a transmitting wireless device without substantially impairing a receiving wireless device's ability to accurately receive the transmitted signal. In at least one embodiment, a receiving wireless device transmits an indication of its link margin to the transmitting wireless device. Based on the link margin of the receiving wireless device, the transmitting wireless device may reduce its transmit power, thereby reducing its power consumption without jeopardizing receiving wireless device's ability to accurately receive and process the transmitted signal. Exemplary techniques for transmitting an indication of a receiving wireless device's link margin to a transmitting wireless device are described in detail with reference to Figures 1-3.

In certain instances, a transmitting wireless device may be in communication with a number of receiving wireless devices. To illustrate, in the system 100, the wireless device 102, for example, may be in communication with the access point 106 and the wireless device 104 (via direct link 110). Communication between the wireless devices 102 and 104 and the access point 106 may be performed using, for example, a two-antenna transceiver at the wireless device 102, with one antenna transmitting and receiving with the access point 106 over one channel and another antenna transmitting and receiving with the wireless station 104 over a second channel. In this instance, the wireless station 102 may be adapted to receive a separate indication of a link margin from each of the access point 106 and the wireless device 104 and, in response, adjust the transmit power of the corresponding antenna accordingly.

In other instances, the access point 106 and wireless devices 102 and 104 may communicate over the same channel. The wireless device 102 therefore may adjust the transmit power of its transceiver in accordance with the smallest link margin of the receiving devices. For example, if the access point 106 has a link margin of 16 dB and the wireless station 104 has a link margin of 12 dB with respect to transmissions from the wireless device 102, the wireless device 102 may adjust its transmit power based on the 12 dB link margin regardless of whether the wireless device 102 is transmitting to the access point 106 or transmitting to the wireless device 104. Alternatively, the wireless device 102 may adjust its transmit power based on the link margin of the wireless device to which the wireless device 102 is preparing to transmit a signal. To illustrate using the above example, the wireless device 102 may use a first transmit power to transmit a signal to the access point 106, but use a second, lower transmit power to transmit a signal to the wireless device 104 due to its lower link margin. In addition to changing the transmit power, the transmit rate may be changed too. Selecting a higher rate implies that the coding gain will be lower, which has an effect similar to decreasing the transmit power. In the following, adjusting the transmit power will be used to indicate both mechanisms, i.e. adjusting the actual transmit power and adjusting the coding gain.

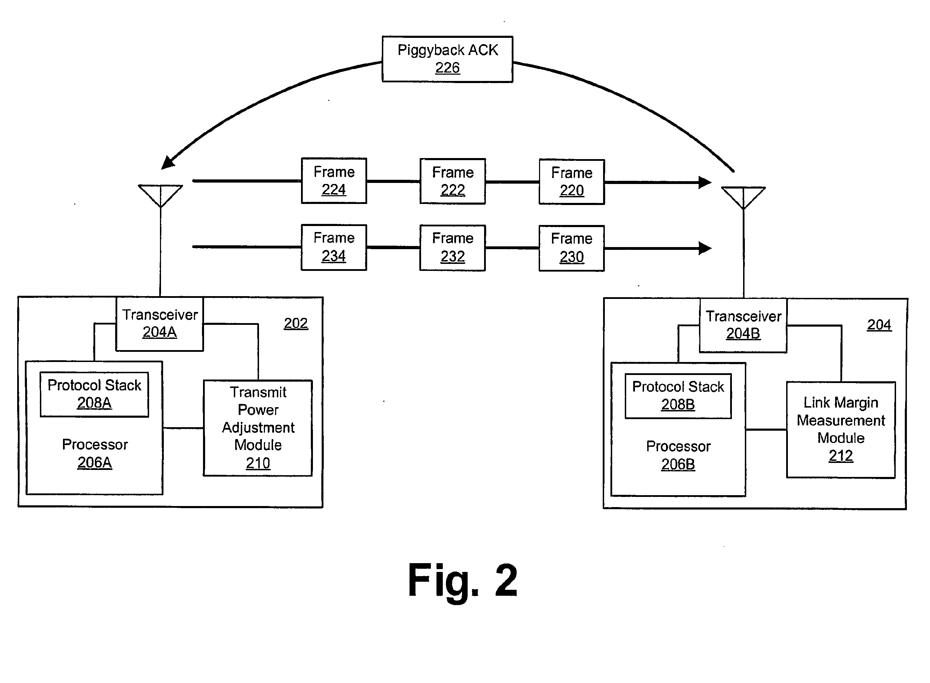

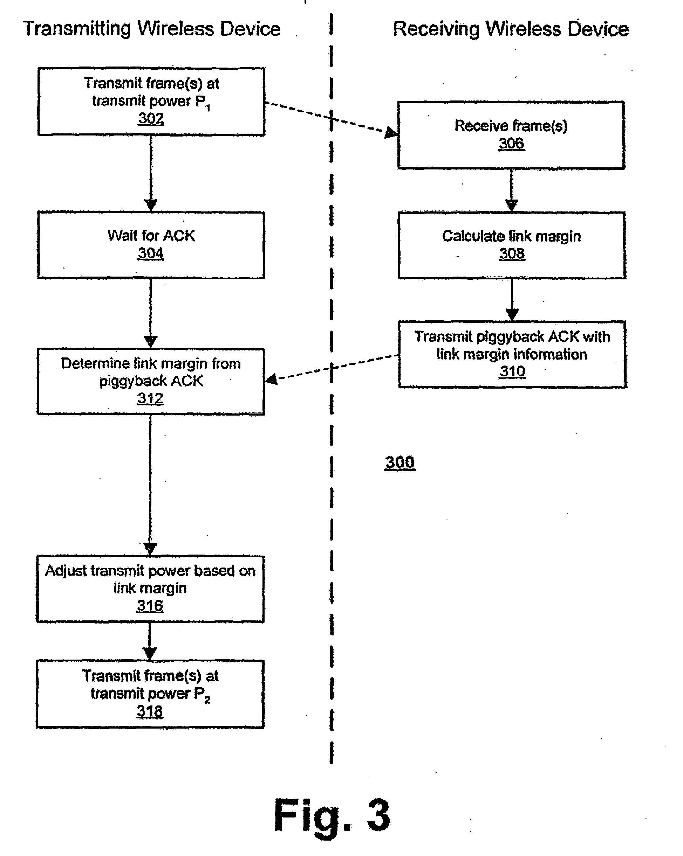

Referring now to Figures 2 and 3, an exemplary transmitting wireless device 202 and an exemplary receiving wireless device 204, as well as an exemplary method 300 of their operation, are illustrated in accordance with at least one embodiment of the present invention. Although wireless device 202 is referred to herein as a transmitting wireless device and wireless device 204 is referred to as a receiving wireless device for ease of reference, wireless devices 202 and 204 may act as both transmitters and receivers of information depending on their use and implementation. Accordingly, those skilled in the art will appreciate that a wireless device may implement the features of both the receiving wireless device 202 and receiving wireless device 204 such that the wireless device is enabled to both adjust its transmit power based at least in part on the link margin of another wireless device, as well as transmit an indication of its link margin to another wireless device.

In the illustrated example of Figure 2, the transmitting wireless device 202 includes at least a transceiver 204A for transmitting and/or receiving signals, a processor 206A and a protocol stack 208A for processing and otherwise preparing information for transmission via the transceiver 204A, as well as for processing information received via the transceiver 204A. The transmitting wireless device 202 further includes a transmit power adjustment module 210 for adjusting the transmit power of the transceiver based at least in part on link margin information received from a receiving wireless device (e.g., wireless device 204). The transmit power adjustment module 210 may be implemented as software, hardware, firmware, or a combination thereof. To illustrate, the transmit power adjustment module 210 may be implemented as a software component of the protocol stack 208A, as a separate software program or module executed by the processor 206A, or as a software or hardware component implemented as part of the transceiver 204A.

As with the wireless device 202, the wireless device 204 includes a transceiver 204B for transmitting and/or receiving signals to and from other wireless devices and a processor 206B and protocol stack 208B for processing received information and information to be transmitted. The wireless device 204 further includes a link margin measurement module 212 for measuring the link margin of the transceiver 204B. The link margin measurement module 212 may be implemented as software, hardware, firmware, or a combination thereof, and may be implemented as a part of the transceiver 204B, the protocol stack 208B, a software program or module executed by the processor 206B, as a separate hardware or software component, and the like.

As noted above, a conventional wireless device typically transmits at the maximum permissible power because it is unaware or uncertain of the link margin of the receiving wireless device. To overcome this lack of information on the part of the transmitting wireless device, in at least one embodiment, the receiving wireless device 204 is adapted to measure its link margin relative to previous transmissions from the transmitting wireless device 202 and to send an indication of this link margin to the wireless device 202. In one embodiment, the wireless device 204 may be adapted to measure and transmit an indication of its link margin to the transmitting wireless device 202 without prompting from the wireless device 202. To illustrate, the wireless device 204 may be adapted to periodically transmit an indication of its link margin to the wireless device 202 as, for example, a data frame or to transmit an indication of its link margin when its link margin changes. In this case, the link margin information may be provided to the processor 206A and protocol stack 208B and be included as part of a data frame for transmission via the transceiver 204B.

This unprompted approach, while effective at informing the transmitting wireless device 202 of its link margin, is somewhat inefficient as bandwidth between the wireless devices 202 and 204 is consumed by the transmission of standard data packets having link margin information. Accordingly, in other embodiments, link margin information is provided to the transmitting wireless device 202 by including the link margin information with other information to be transmitted, thereby resulting in a reduction in the bandwidth consumed by the transmission of link margin information. In one embodiment, the link margin information may be concatenated with other data to be transmitted to the wireless device 202, where the link margin information and data are transmitted as a single frame to the wireless device 202. To this effect, an LLC encpasulation may be used to indicate to the receiver that the further portion of the payload contains a Link Margin information element with a well known lengt, followed by the regular data portion. A regular data frame would have contained only the data portion, but not the embedded Link margin information element. In another embodiment, the link margin is appended to the MAC header and the MAC header indicates that this a frame of a type which includes link margin information. In another embodiment, the link margin is encoded in MAC header fields that are currently unused, while through the association or link setup process, the receiver knows that the sender is capable of encoding the link margin in these information fields, and will interpret the information fields accordingly..

In another embodiment, the wireless device 204 may make use of acknowledgement (ACK) frames to transmit link margin information. Many wireless standards provide for the use of an ACK frame to acknowledge receipt of a data frame or other type of frame from a transmitting device. Typically, these wireless standards mandate that upon receipt of certain types of frames, the receiving device immediately acknowledge with an ACK frame. In certain instances, however, some wireless standards provide for the possibility to combine the ACK frame with data to be transmitted from the receiving device to the transmitting device into a single frame for transmission to the transmitting device. The resulting frame having both data and an ACK is commonly referred to as a piggyback ACK frame, indicating that the ACK is "piggybacked" onto the data frame. To illustrate, IEEE 802.11e provides for a combined quality-of-service (QoS)/data/ACK frame type (one example of a piggyback frame) that may be transmitted to acknowledge receipt of a data frame from a transmitting device, where the combined QoS/data/ACK frame includes both an ACK for a received data frame as well as data. As illustrated with reference to Figures 2 and 3, the receiving wireless device 204 may use a piggyback ACK frame to transmit to the transmitting wireless device 202 both an ACK to acknowledge receipt of a data frame from the wireless device 202 and link margin information to permit the wireless device 202 to adjust the transmit power of its transceiver 204A accordingly. As a result, link margin information may be transferred without significantly consuming additional bandwidth to do so.

In another embodiment, the response frame also includes the expected link margin for the next higher transmit rate, and/or a suggested optimal transmit rate to reach this receiver, and/or an indication of the signal strength with which the frame was received, and/or and indication of the overall quality with which the frame was received. In the remainder of this disclosure, the link margin will be assumed to refer to any of these possibilities.

Referring to Figure 3, an exemplary method 300 for minimizing power consumption by providing the transmitting device 202 with link margin information is illustrated. In the illustrated example, steps 302, 304 and 312-318 are performed at the transmitting wireless device 202 and steps 306-310 are performed at the receiving wireless device 204.

The exemplary method 300 initiates at step 302 wherein the transmitting wireless device 202 transmits one or more frames 220-224 to the receiving wireless device 204 at a first transmit power (designated herein as P₁). The one or more frames 220-224 may include, for example, data frames, ACK frames, QoS frames, and the like. At step 304 the transmitting wireless device 202 waits for a response frame, which could be an ACK frame, from the receiving wireless device 204 acknowledging receipt of the one or more frames 220-224.

At step 306, the wireless device 204 receives the signals representative of one or more of the transmitted frames 220-224, converts the frames to an appropriate data form, and processes the data using the processor 206A or other component. At step 308, the link measurement margin module 212 measures the link margin of the receiving wireless device 204 with respect to signals transmitted by the transmitting wireless device 202. Any of a variety of techniques may be used to measure the link margin of the receiving wireless device. In one embodiment, the link margin may be measured from the signal representing the one or more frames 220-224 received at step 306. For example, the link margin measured for the last frame received from the wireless device 202 (e.g., frame 224) may be designated, at least temporarily, as the link margin of the wireless device 204 with respect to the wireless device 202. Alternatively, the wireless device 202 may measure the link margin as a moving average of link margin values measured on recently received frames. For example, the link margin could be designated as the average link margin for the last X frames received, where X represents the size, in terms of frames, of the window. In general, the link margin is the difference between the sensitivity of the receiver for a certain PHY rate and the received signal strength. The sensitivity will be different for different PHY rates, due the differences in coding gain and other factors which are implementation dependent.

It may be advantageous to adjust the transmit power of the transmitting wireless device 202 even though no data has yet to be transmitted to the receiving device 204. Accordingly, to receive a frame from the wireless device 202 by which the link margin may be measured, the receiving wireless device 204 may be adapted to transmit a data frame to the wireless device 202. In response, the transmitting wireless device 202 typically sends an ACK frame to acknowledge receipt of the data frame. The signal representing the ACK frame (one embodiment of frames 220-224) then may be used by the link margin measurement module 212 to determine the link margin value (step 306).

Link Margin information may be added to any return frame, like an ACK, CTS, or Data frame. ACK and CTS are control response frames, which are transmitted after a SIFS period. The Data frame could be transmitted after SIFS period (i.e. after being polled) or after a backoff. Indicating that Link Margin information is appended to the return frame may be achieved in the following way:

An indicator bit inside the Frame Control or QoS Control Field indicates that additional information is present, like Link Margin information. This method works for all frame types.

An LLC encapsulation which indicates that additional information is appended, like Link Margin information. This mechanism works only for Data frames, because ACK and CTS have no data payload which could contain an LLC layer encapsulation.

A new frame type/subtype is used to indicate the presence of a MAC header which includes link margin information.

The Link Margin information may be added as a fixed field or in the form of an Link Margin Information Element. The generic format of Information Elements is defined in the IEEE 802.11 spec. It may be possible that any number of Information Elements can be appended, in which case an Information Element count may be included. A final possibility is that Data is also encapsulated as an Information Element and appended to the string of Information Element.

At step 310, an indication of the link margin measured at step 308 is incorporated into a retrun frame 226 in the ways described above and transmitted to the wireless device 202. The indication of the link margin may include, for example, a value corresponding to the measured link margin value, an index to one of a plurality of link margin ranges that includes the measured link margin value, and the like.

At step 312, the transmitting wireless device 202 receives the return frame 226 and processes the return frame 226 using, for example, the processor 206A and protocol stack 208A to determine the link margin of the wireless device 204. Determining the link margin from the return frame 226 may include, for example, extracting a link margin value from a corresponding field of the return frame 226, extracting an index value from a corresponding field, where the index value corresponds to a particular link margin value of a table of link margin values, and the like.

Based at least in part on the link margin information, the transmit power adjustment module 210 determines, at step 316, an adjusted second transmit power (designated herein as P₂) for the transceiver 204A when transmitting signals to the transceiver 204B of the wireless device 204. The degree to which the transmit power adjustment module 210 adjusts the transmit power of the transceiver 204A may be determined from the link margin in any of a variety of ways. For example, it may be appropriate to reduce the transmit power of the transceiver 204A by an amount substantially equal to the link margin (i.e., P₂ ≈ P₁ - link margin). Alternatively, it may be appropriate to reduce the transmit power by an amount commensurate with the link margin while leaving a small margin for error (i.e., P₂ ≈ P₁ - link margin + error margin). As yet another example, it may be appropriate to reduce the transmit power by an amount substantially proportionate to the magnitude of the link margin (i.e., P₂ ≈ P₁ - A*link margin + error margin, 0 < A < 1).

Moreover, the transmitting wireless device 202 may use other information in addition to the link margin to select an appropriate adjusted transmit power. To illustrate, the packet error rate (PER) is a common metric used to indicate the integrity of a transmitted signal. Thus, the transmit power adjustment module 210 may successively lower the transmit power of the transceiver 204A in view of the link margin until the PER becomes intolerable (e.g., a PER > 10%). The transmit power where the PER becomes excessive therefore could represent the minimum allowable transmit power that may be selected for the current link margin. Although various techniques for determining an appropriate adjustment to the transmit power of the transceiver 204A based at least one part on the link margin of the wireless device 204 have been described, those skilled in the art may develop alternate techniques using the guidelines provided herein without departing from the spirit or the scope of the present invention.

After adjusting the transmit power of the transceiver 204A, subsequent frames (e.g., frame 230-234) may be transmitted to the receiving wireless device 204 at the reduced transmit power P₂ at step 318. It will be appreciated that the link margin of the wireless device 204 with respect to wireless device 202 may change due to a change in the distance between devices 202, 204, the introduction of noise or other interference, and the like. Accordingly, in at least one embodiment, the method 300 may be reiterated one or more times to readjust the transmit power of the transceiver 204A on a sporadic, periodic or continuous basis. For example, the wireless device 202 may initiate a readjustment of its transmit power every X frames transmitted or the wireless device 204 may monitor changes in the link margin and initiate a readjustment of the transmit power of the wireless device 202 whenever the link margin changes by a significant amount.

As noted above, increasing the transmit (or PHY) rate and reducing the transmit power are two effective techniques for minimizing power consumption. However, in certain situations, reducing the transmit power may only be effective in minimizing power consumption if the maximum supportable transmit rate is already in use between the wireless devices 202 and 204. Accordingly, in one embodiment, the adjustment of transmit power based at least in part on link margin is employed after establishing the maximum supportable transmit rate. To this end, the link margin also may be used as an indicator for establishing an appropriate transmit rate in addition to its use in adjusting the transmit power.

As a result of the application of exemplary method 300, the power consumed by the transceiver 204 in transmitting subsequent frames at an adjusted transmit power is less than had the transceiver 204 continued to transmit at the original transmit power. At the same time, because the transmitting wireless device 202 is provided with the link margin of the receiving wireless device 202, the transmitting wireless device 202 can select an appropriate degree of adjustment that is unlikely to result in reception problems by the receiving wireless device 204.

Other embodiments, uses, and advantages of the invention will be apparent to those skilled in the art from consideration of the specification and practice of the invention disclosed herein. The specification and drawings should be considered exemplary only, and the scope of the invention is accordingly intended to be limited only by the following claims and equivalents thereof.

## Claims

1. A method for minimizing of transmit power in a wireless network at least comprising a first wireless device (204) and a second wireless device (202), the method comprising the steps of:
receiving, at the first wireless device (204), a plurality of first frames (220-224) from the second wireless device (202);
**characterized by** steps of:
the first wireless device (204) determining an overall link margin for the plurality of first frames (220-224) by calculating a moving average of individual link margins measured on some of the plurality of first frames (220-224) received from the second wireless device (202); and
the first wireless device (204) transmitting link margin information comprising the overall link margin to the second wireless device (202) in a second frame (226).

2. The method as in Claim 1, **characterized by** the second frame (226) is an acknowledgement, ACK, frame acknowledging receipt of one or more of the plurality of first frames (220-224).

3. The method as in Claim 1, **characterized in that** the link margin information is transmitted as part of a Data frame which is transmitted for receipt by the second device (202).

4. The method as in Claim 1, **characterized in that** the link margin information includes an estimated link margins at one or more other wireless transmission rates.

5. The method as in Claim 1, **characterized in that** the link margin information includes an estimate of an optimal transmission rate.

6. The method as in Claim 1, **characterized in that** a presence of link margin information is indicated by a bit in the MAC header of the second frame (226).

7. The method as in Claim 1, **characterized in that** a presence of link margin information is indicated by a specific type/subtype combination inside the MAC header of the second frame (226).

8. The method as in Claim 2, **characterized in that** at least a portion of the link margin information is included in a Frame Control field of the ACK frame.

9. The method as in Claim 2, **characterized in that** at least a portion of the link margin information is included in a Quality of Service, QoS, field of the ACK frame.

10. The method as in claim 1, **characterized in that** the plurality of first frames (220-224) are transmitted at a first transmit power P₁, the method further comprising the step of:
receiving, at the first wireless device (204), additional frames (230-234) transmitted by the second wireless device (202) at a second transmit power P₂ lower than the first transmit power P₁.

11. The method as in claim 1, **characterized by** further comprising the first wireless device (204) determining the overall link margin and transmitting the link margin information for reception by the second wireless device (202) without being instructed to do so by the second wireless device (202).

12. The method as in claim 11, **characterized by** the first wireless device (204) determines the overall link margin and transmits the link margin information for reception by the second wireless device (202) at a regular periodic interval.

13. The method as in claim 11, **characterized by** the first wireless device (204) determines the overall link margin and transmits the link margin information for reception by the second wireless device (202) at a sporadic interval.

14. The method as in claim 11, **characterized by** the first wireless device (204) determines the overall link margin and transmits the link margin information for reception by the second wireless device (202) on a continuous basis, such that an updated overall link margin is attached to every frame transmitted to the second wireless device (202).

15. A method for minimizing of transmit power in a wireless network at least comprising a first wireless device (202) and a second wireless device (204), the method comprising the step of:
transmitting, from the first wireless device (202) to the second wireless device (204), a plurality of first frames (220-224);
**characterized by** steps of:
receiving, at the first wireless device (202), a second frame (226) from the second wireless device (204) responsive to the plurality of first frames (220-224), the second frame (226) including link margin information comprising an overall link margin of the plurality of first frames (220-224); and
successively lowering a transmit power of the first wireless device (202) based at least in part on the link margin information until a packet error rate rises above 10%.

16. The method as in Claim 15, **characterized in that** the second frame (226) is an acknowledgement, ACK, frame acknowledging receipt of one or more of the first frames (220-224).

17. The method as in Claim 16, **characterized by** further comprising the step of:
the first wireless device (202) transmitting, at the successively lowered transmit power, an additional plurality of first frames (230-234) to the second wireless device(204).

18. The method as in Claim 15, **characterized by** the overall link margin includes a moving average of link margins measured on some of the plurality of first frames (220-224) received from the first wireless device (202).

19. The method of claim 16, **characterized in that** the first wireless device (102) includes at least a first and second antenna, and wherein successively lowering the transmit power of the first wireless device (102) comprises:
successively lowering the transmit power via the first antenna based at least in part on the link margin of the second wireless device (104) until the packet error rate rises above 10%; and
separately adjusting a transmit power via the second antenna based at least in part on a link margin received from an access point (106).

20. The method of claim 15, **characterized in that** the first wireless device (102) is in communication with an access point (106) and receives an indication of a link margin information of the access point (106), and wherein successively lowering the transmit power of the first wireless device (102) comprises:
successively lowering the transmit power of the first wireless device (102) based on a smallest of the link margins information received from the second wireless device (104) and the access point (106) for communications with the second wireless device (104) and the access point (106) until a packet error rate rises above 10%.

21. The method as in claim 15, **characterized by** further comprising the second wireless device (202) determining an overall link margin and transmitting the link margin information for reception by the second wireless device (202) without being instructed to do so by the first wireless device (204).

22. The method as in claim 21, **characterized by** the second wireless device (202) determines the overall link margin and transmits the link margin information for reception by the first wireless device (204) at a regular periodic interval.

23. The method as in claim 21, **characterized by** the second wireless device (202) determines the overall link margin and transmits the link margin information for reception by the first wireless device (204) at a sporadic interval.

24. The method as in claim 21, **characterized by** the second wireless device (202) determines the overall link margin and transmits the link margin information for reception by the first wireless device (204) on a continuous basis, such that an updated overall link margin is attached to every frame transmitted to the first wireless device (204).

25. A first wireless device (204) for minimizing of transmit power in a wireless network at least comprising the first wireless device (204) and a second wireless device (202) comprising:
a transceiver (204B);
**characterized by**
a link margin measurement module (212) configured to determine an overall link margin based at least in part on a calculation of a moving average of individual link margins measured on some of a plurality of first frames (220-224) received by the transceiver (204B) from the second wireless device (202);
means for transmitting, via the transceiver (204B), a link margin information comprising the overall link margin in a second frame (226) for reception by the second wireless device (202).

26. The wireless device as in Claim 25, **characterized in that** the second frame (226) is an acknowledgement frame.

27. The wireless device as in Claim 26, **characterized in that** the link margin information is included in a Quality of Service, QoS, field of the acknowledgement frame.

28. The first wireless device (204) as in claim 25, **characterized in that** the link margin measurement module (212) is configured to determine the overall link margin and to cause the means for transmitting to transmit the link margin information to the second wireless device (202) without being instructed to do so by the second wireless device (202).

29. The first wireless device (204) as in claim 28, **characterized in that** the link margin measurement module (212) is configured to determine the overall link margin and to cause the means for transmitting to transmit the link margin information to the second wireless device (202) at a regular periodic interval.

30. The first wireless device (204) as in claim 28, **characterized in that** the link margin measurement module (212) is configured to determine the overall link margin and to cause the means for transmitting to transmit the link margin information to the second wireless device (202) at a sporadic interval.

31. The first wireless device (204) as in claim 28, **characterized in that** the link margin measurement module (212) is configured to determine the overall link margin and to cause the means for transmitting to transmit the link margin information to the second wireless device (202) on a continuous basis, such that an updated overall link margin is attached to every frame transmitted to the second wireless device (202).

32. A first wireless device (202) for minimizing of transmit power in a wireless network at least comprising the first wireless device (202) and a second wireless device (204) comprising:
a transceiver (204A) adapted to transmit a plurality of first frames (220-224) to the second wireless device (204);
**characterized by**
means for receiving a second frame from the second wireless device (204), the second frame including link margin information comprising an overall link margin of the of the plurality of first frames (220-224); and
a transmit power adjustment module (210) configured to successively lower a transmit power of the transceiver (204A) based at least in part on the link margin information until a packet error rate rises above 10%.

33. The wireless device as in Claim 32, **characterized in that** the second frame includes an ACK frame (226).

34. The wireless device as in Claim 33, **characterized in that** the link margin is included in a Quality of Service, QoS, field of the ACK frame (226).

35. The wireless device as in claim 32, **characterized in that** the transceiver (204A) includes a first and second antenna, the means for transmitting including means for transmitting one or more frames (220-224) to the second wireless device (104) via the first antenna and means for transmitting one or more frames to an access point (106) via the second antenna, and wherein the transmit power adjustment module (210) is further configured to:
successively lower a transmit power via the first antenna based at least in part on the link margin information of the second wireless device (104) until a packet error rate rises above 10%; and
separately adjust a transmit power via the second antenna based at least in part on a link margin information received from the access point (106).

36. The wireless device as in claim 32, **characterized in that** the transceiver (204A) is further adapted to transmit a further plurality of first frames (220-224) to an access point (106), wherein the means for receiving the second frame includes means for receiving a further second frame from the access point (106) and including a further link margin information of the access point (106), and wherein the transmit power adjustment module is further configured to:
successively lower the transmit power of the first wireless device (102) based on a smallest of the link margins received from the second wireless device (104) and the access point (106) for communications with the second wireless device (104) and the access point (106) until a packet error rate rises above 10%.

## Patentansprüche

1. Verfahren zum Minimieren der Sendeleistung in einem Drahtlosnetz, das wenigstens eine erste Drahtlosvorrichtung (204) und eine zweite Drahtlosvorrichtung (202) umfasst, wobei das Verfahren die folgenden Schritte umfasst:
Empfangen an der ersten Drahtlosvorrichtung (204) mehrerer erster Rahmen (220-224) von der zweiten Drahtlosvorrichtung (202);
**gekennzeichnet durch** folgende Schritte:
die erste Drahtlosvorrichtung (204) bestimmt eine Gesamt-Verbindungstoleranz für die mehreren ersten Rahmen (220-224) **durch** Berechnen des gleitenden Durchschnitts einzelner Verbindungstoleranzen, die auf einigen der mehreren ersten Rahmen (220-224), die von der zweiten Drahtlosvorrichtung (202) empfangen werden, gemessen werden; und
die erste Drahtlosvorrichtung (204) sendet Verbindungstoleranzinformationen, welche die Gesamt-Verbindungstoleranz umfassen, zu der zweiten Drahtlosvorrichtung (202) in einem zweiten Rahmen (226).

2. Verfahren nach Anspruch 1, **dadurch gekennzeichnet, dass** der zweite Rahmen (226) ein Bestätigungsrahmen (ACK-Rahmen) ist, der den Empfang eines oder mehrerer der mehreren ersten Rahmen (220-224) bestätigt.

3. Verfahren nach Anspruch 1, **dadurch gekennzeichnet, dass** die Verbindungstoleranzinformationen als Teil eines Datenrahmens gesendet werden, der zum Empfang durch die zweite Drahtlosvorrichtung (202) gesendet wird.

4. Verfahren nach Anspruch 1, **dadurch gekennzeichnet, dass** die Verbindungstoleranzinformationen eine geschätzte Verbindungstoleranz bei einer oder mehreren weiteren Drahtlosübertragungsraten enthält.

5. Verfahren nach Anspruch 1, **dadurch gekennzeichnet, dass** die Verbindungstoleranzinformationen eine Schätzung einer optimalen Übertragungsrate enthält.

6. Verfahren nach Anspruch 1, **dadurch gekennzeichnet, dass** ein Vorhandensein von Verbindungstoleranzinformationen durch ein Bit in dem MAC-Nachrichtenkopf des zweiten Rahmens (226) angegeben ist.

7. Verfahren nach Anspruch 1, **dadurch gekennzeichnet, dass** ein Vorhandensein von Verbindungstoleranzinformationen durch eine spezifische Typ/Subtyp-Kombination innerhalb des MAC-Nachrichtenkopfs des zweiten Rahmens (226) angegeben ist.

8. Verfahren nach Anspruch 2, **dadurch gekennzeichnet, dass** wenigstens ein Abschnitt der Verbindungstoleranzinformationen in einem Rahmensteuerfeld des ACK-Rahmens enthalten ist.

9. Verfahren nach Anspruch 2, **dadurch gekennzeichnet, dass** wenigstens ein Abschnitt der Verbindungstoleranzinformationen in einem Dienstgütefeld (QoS-Feld) des ACK-Rahmens enthalten ist.

10. Verfahren nach Anspruch 1, **dadurch gekennzeichnet, dass** die mehreren ersten Rahmen (220-224) mit einer ersten Sendeleistung P₁ gesendet werden, wobei das Verfahren ferner den folgenden Schritt umfasst:
Empfangen an der ersten Drahtlosvorrichtung (204) zusätzlicher Rahmen (230-234), die von der zweiten Drahtlosvorrichtung (202) mit einer zweiten Sendeleistung P₂, die geringer ist als die erste Sendeleistung P₁, gesendet werden.

11. Verfahren nach Anspruch 1, **dadurch gekennzeichnet, dass** es ferner umfasst, dass die erste Drahtlosvorrichtung (204) die Gesamt-Verbindungstoleranz bestimmt und die Verbindungstoleranzinformationen zum Empfang durch die zweite Drahtlosvorrichtung (202) sendet, ohne dass sie durch die zweite Drahtlosvorrichtung (202) dazu angewiesen wird.

12. Verfahren nach Anspruch 11, **dadurch gekennzeichnet, dass** die erste Drahtlosvorrichtung (204) die Gesamt-Verbindungstoleranz bestimmt und die Verbindungstoleranzinformationen zum Empfang durch die zweite Drahtlosvorrichtung (202) in einem regelmäßigen periodischen Abstand sendet.

13. Verfahren nach Anspruch 11, **dadurch gekennzeichnet, dass** die erste Drahtlosvorrichtung (204) die Gesamt-Verbindungstoleranz bestimmt und die Verbindungstoleranzinformationen zum Empfang durch die zweite Drahtlosvorrichtung (202) in einem unregelmäßigen Abstand sendet.

14. Verfahren nach Anspruch 11, **dadurch gekennzeichnet, dass** die erste Drahtlosvorrichtung (204) die Gesamt-Verbindungstoleranz bestimmt und die Verbindungstoleranzinformationen zum Empfang durch die zweite Drahtlosvorrichtung (202) auf kontinuierlicher Basis sendet, so dass eine aktualisierte Gesamt-Verbindungstoleranz an jeden Rahmen angefügt ist, der zu der zweiten Drahtlosvorrichtung (202) gesendet wird.

15. Verfahren zum Minimieren der Sendeleistung in einem Drahtlosnetz, das wenigstens eine erste Drahtlosvorrichtung (202) und eine zweite Drahtlosvorrichtung (204) umfasst, wobei das Verfahren den folgenden Schritt umfasst:
Senden mehrerer erster Rahmen (220-224) von der ersten Drahtlosvorrichtung (202) zu der zweiten Drahtlosvorrichtung (204);
**gekennzeichnet durch** folgende Schritte:
Empfangen an der ersten Drahtlosvorrichtung (202) eines zweiten Rahmens (226) von der zweiten Drahtlosvorrichtung (204) in Reaktion auf die mehreren ersten Rahmen (220-224), wobei der zweite Rahmen (226) Verbindungstoleranzinformationen enthält, die eine Gesamt-Verbindungstoleranz der mehreren ersten Rahmen (220-224) umfassen; und
sukzessives Verringern der Sendeleistung der ersten Drahtlosvorrichtung (202) basierend wenigstens teilweise auf den Verbindungstoleranzinformationen, bis eine Paketfehlerrate über 10 % ansteigt.

16. Verfahren nach Anspruch 15, **dadurch gekennzeichnet, dass** der zweite Rahmen (226) ein Bestätigungs-Rahmen (ACK-Rahmen) ist, der den Empfang eines oder mehrerer der ersten Rahmen (220-224) bestätigt.

17. Verfahren nach Anspruch 16, **dadurch gekennzeichnet, dass** es ferner den folgenden Schritt umfasst:
die erste Drahtlosvorrichtung (202) sendet mit der sukzessiv verringerten Sendeleistung zusätzliche mehrere erste Rahmen (230-234) zu der zweiten Drahtlosvorrichtung (204).

18. Verfahren nach Anspruch 15, **dadurch gekennzeichnet, dass** die Gesamt-Verbindungstoleranz einen gleitenden Mittelwert von Verbindungstoleranzen enthält, die auf einigen der mehreren ersten Rahmen (220-224), die von der ersten Drahtlosvorrichtung (202) empfangen werden, gemessen werden.

19. Verfahren nach Anspruch 16, **dadurch gekennzeichnet, dass** die erste Drahtlosvorrichtung (102) wenigstens eine erste und eine zweite Antenne enthält, wobei das sukzessive Verringern der Sendeleistung der ersten Drahtlosvorrichtung (102) Folgendes umfasst:
sukzessives Verringern der Sendeleistung über die erste Antenne basierend wenigstens teilweise auf der Verbindungstoleranz der zweiten Drahtlosvorrichtung (104), bis die Paketfehlerrate über 10 % ansteigt; und
getrenntes Einstellen einer Sendeleistung über die zweite Antenne basierend wenigstens teilweise auf einer Verbindungstoleranz, die von einem Zugangspunkt (106) empfangen wird.

20. Verfahren nach Anspruch 15, **dadurch gekennzeichnet, dass** die erste Drahtlosvorrichtung (102) in Kommunikation mit einem Zugangspunkt (106) ist und eine Anzeige von Verbindungstoleranzinformationen des Zugangspunkts (106) empfängt, und wobei das sukzessive Verringern der Sendeleistung der ersten Drahtlosvorrichtung (102) Folgendes umfasst:
sukzessives Verringern der Sendeleistung der ersten Drahtlosvorrichtung (102) basierend auf einer kleinsten der Verbindungstoleranzinformationen, die von der zweiten Drahtlosvorrichtung (104) und dem Zugangspunkt (106) zur Kommunikation mit der zweiten Drahtlosvorrichtung (104) und dem Zugangspunkt (106) empfangen werden, bis eine Paketfehlerrate über 10 % ansteigt.

21. Verfahren nach Anspruch 15, **dadurch gekennzeichnet, dass** es ferner umfasst, dass die zweite Drahtlosvorrichtung (202) eine Gesamt-Verbindungstoleranz bestimmt und die Verbindungstoleranzinformationen zum Empfang durch die zweite Drahtlosvorrichtung (202) sendet, ohne dass sie durch die erste Drahtlosvorrichtung (204) dazu angewiesen ist.

22. Verfahren nach Anspruch 21, **dadurch gekennzeichnet, dass** die zweite Drahtlosvorrichtung (202) die Gesamt-Verbindungstoleranz bestimmt und die Verbindungstoleranzinformationen zum Empfang durch die erste Drahtlosvorrichtung (204) in einem regelmäßigen periodischen Abstand sendet.

23. Verfahren nach Anspruch 21, **dadurch gekennzeichnet, dass** die zweite Drahtlosvorrichtung (202) die Gesamt-Verbindungstoleranz bestimmt und die Verbindungstoleranzinformationen zum Empfang durch die erste Drahtlosvorrichtung (204) in einem unregelmäßigen Abstand sendet.

24. Verfahren nach Anspruch 21, **dadurch gekennzeichnet, dass** die zweite Drahtlosvorrichtung (202) die Gesamt-Verbindungstoleranz bestimmt und die Verbindungstoleranzinformationen zum Empfang durch die erste Drahtlosvorrichtung (204) auf kontinuierlicher Basis sendet, so dass eine aktualisierte Gesamt-Verbindungstoleranz an jeden Rahmen angefügt ist, der zu der ersten Drahtlosvorrichtung (204) gesendet wird.

25. Erste Drahtlosvorrichtung (204) zum Minimieren der Sendeleistung in einem Drahtlosnetz, das wenigstens die erste Drahtlosvorrichtung (204) und eine zweite Drahtlosvorrichtung (202) umfasst, die Folgendes umfasst:
einen Sender/Empfänger (204B);
**gekennzeichnet durch**
ein Verbindungstoleranzmessmodul (212), das konfiguriert ist, basierend wenigstens teilweise auf einer Berechnung eines gleitenden Durchschnitts einzelner Verbindungstoleranzen, die auf einigen der mehreren ersten Rahmen (220-224) gemessen werden und die von dem Sender/Empfänger (204B) von der zweiten Drahtlosvorrichtung (202) empfangen werden, eine Gesamt-Verbindungstoleranz zu bestimmen;
Mittel zum Senden von Verbindungstoleranzinformationen, welche die Gesamt-Verbindungstoleranz umfassen, über den Sender/Empfänger (204B) in einem zweiten Rahmen (226) zum Empfang **durch** die zweite Drahtlosvorrichtung (202).

26. Drahtlosvorrichtung nach Anspruch 25, **dadurch gekennzeichnet, dass** der zweite Rahmen (226) ein Bestätigungsrahmen ist.

27. Drahtlosvorrichtung nach Anspruch 26, **dadurch gekennzeichnet, dass** die Verbindungstoleranzinformationen in einem Dienstgütefeld (QoS-Feld) des Bestätigungsrahmens enthalten sind.

28. Erste Drahtlosvorrichtung (204) nach Anspruch 25, **dadurch gekennzeichnet, dass** das Verbindungstoleranzmessmodul (212) konfiguriert ist, um die Gesamt-Verbindungstoleranz zu bestimmen und um zu bewirken, dass die Mittel zum Senden die Verbindungstoleranzinformationen zu der zweiten Drahtlosvorrichtung (202) senden, ohne dazu durch die zweite Drahtlosvorrichtung (202) aufgefordert zu werden.

29. Erste Drahtlosvorrichtung (204) nach Anspruch 28, **dadurch gekennzeichnet, dass** das Verbindungstoleranzmessmodul (212) konfiguriert ist, die Gesamt-Verbindungstoleranz zu bestimmen und um zu bewirken, dass die Mittel zum Senden die Verbindungstoleranzinformationen zu der zweiten Drahtlosvorrichtung (202) in einem regelmäßigen, periodischen Abstand senden.

30. Erste Drahtlosvorrichtung (204) nach Anspruch 28, **dadurch gekennzeichnet, dass** das Verbindungstoleranzmessmodul (212) konfiguriert ist, die Gesamt-Verbindungstoleranz zu bestimmen und zu bewirken, dass die Mittel zum Senden die Verbindungstoleranzinformationen zu der zweiten Drahtlosvorrichtung (202) in einem unregelmäßigen Abstand senden.

31. Erste Drahtlosvorrichtung (204) nach Anspruch 28, **dadurch gekennzeichnet, dass** das Verbindungstoleranzmessmodul (121) konfiguriert ist, die Gesamt-Verbindungstoleranz zu bestimmen und um zu bewirken, dass die Mittel zum Senden die Verbindungstoleranzinformationen zu der zweiten Drahtlosvorrichtung (202) auf einer kontinuierlichen Basis senden, so dass eine aktualisierte Gesamt-Verbindungstoleranz an jeden Rahmen angefügt ist, der zu der zweiten Drahtlosvorrichtung (202) gesendet wird.

32. Erste Drahtlosvorrichtung (202) zum Minimieren der Sendeleistung in einem Drahtlosnetz, das wenigstens die erste Drahtlosvorrichtung (202) und eine zweite Drahtlosvorrichtung (204) umfasst, die Folgendes umfasst:
einen Sender/Empfänger (204A), der ausgelegt ist, um mehrere erste Rahmen (220-224) zu der zweiten Drahtlosvorrichtung (204) zu senden;
**gekennzeichnet durch**
Mittel zum Empfangen eines zweiten Rahmens von der zweiten Drahtlosvorrichtung (204), wobei der zweite Rahmen Verbindungstoleranzinformationen enthält, die eine Gesamt-Verbindungstoleranz der mehreren der ersten Rahmen (220-224) umfassen; und
ein Sendeleistungseinstellungsmodul (210), das konfiguriert ist, sukzessive eine Sendeleistung des Sender/Empfängers (204A) basierend wenigstens teilweise auf den Verbindungstoleranzinformationen zu verringern, bis eine Paketfehlerrate über 10 % ansteigt.

33. Drahtlosvorrichtung nach Anspruch 32, **dadurch gekennzeichnet, dass** der zweite Rahmen (226) einen ACK-Rahmen (226) enthält.

34. Drahtlosvorrichtung nach Anspruch 33, **dadurch gekennzeichnet, dass** die Verbindungstoleranzinformationen in einem Dienstgütefeld (QoS-Feld) des ACK-Rahmens (226) enthalten sind.

35. Drahtlosvorrichtung nach Anspruch 32, **dadurch gekennzeichnet, dass** der Sender/Empfänger (204A) eine erste und eine zweite Antenne enthält, wobei die Mittel zum Senden Mittel zum Senden eines oder mehrerer Rahmen (220-224) zu der zweiten Drahtlosvorrichtung (104) über die erste Antenne und Mittel zum Senden eines oder mehrerer Rahmen zu einem Zugangspunkt (106) über die zweite Antenne enthalten und wobei das Sendeleistungseinstellungsmodul (210) ferner konfiguriert ist:
sukzessive eine Sendeleistung über die erste Antenne basierend wenigstens teilweise auf den Verbindungstoleranzinformationen der zweiten Drahtlosvorrichtung (104) zu verringern, bis eine Paketfehlerrate über 10 % ansteigt; und
getrennt eine Sendeleistung über die zweite Antenne einzustellen basierend wenigstens teilweise auf Verbindungstoleranzinformationen, die von dem Zugangspunkt (106) empfangen werden.

36. Drahtlosvorrichtung nach Anspruch 32, **dadurch gekennzeichnet, dass** der Sender/Empfänger (204A) ferner ausgelegt ist, um weitere mehrere erste Rahmen (220-224) zu einem Zugangspunkt (106) zu senden, wobei die Mittel zum Empfangen des zweiten Rahmens Mittel zum Empfangen eines weiteren zweiten Rahmens von dem Zugangspunkt (106), der weitere Verbindungstoleranzinformationen des Zugangspunkts (106) enthält, enthalten, und wobei das Sendeleistungseinstellungsmodul ferner konfiguriert ist:
sukzessive die Sendeleistung der ersten Drahtlosvorrichtung (102) basierend auf einer kleinsten der Verbindungstoleranzen, die von der zweiten Drahtlosvorrichtung (104) und dem Zugangspunkt zur Kommunikation mit der zweiten Drahtlosvorrichtung (104) und dem Zugangspunkt (106) empfangen werden, zu verringern, bis eine Paketfehlerrate über 10 % ansteigt.

## Revendications

1. Procédé pour minimiser la puissance de transmission dans un réseau sans fil comprenant au moins un premier dispositif sans fil (204) et un second dispositif sans fil (202), lequel procédé comprend les étapes consistant à :
- recevoir, au niveau du premier dispositif sans fil (204), plusieurs premières trames (220-224) depuis le second dispositif sans fil (202) ;
**caractérisé par** les étapes suivantes :
- le premier dispositif sans fil (204) détermine une marge de liaison globale pour lesdites plusieurs trames (220-224) en calculant une moyenne mouvante des marges de liaison individuelles mesurée sur certaines desdites plusieurs trames (220-224) reçues du second dispositif sans fil (202) ; et
- le premier dispositif sans fil (204) transmet des informations de marges de liaison comprenant la marge de liaison globale au second dispositif sans fil (202) dans une seconde trame (226).

2. Procédé selon la revendication 1, **caractérisé en ce que** la seconde trame (226) est une trame d'accusé de réception, ACK, accusant la réception d'une ou de plusieurs desdites plusieurs premières trames (220-224).

3. Procédé selon la revendication 1, **caractérisé en ce que** les informations de marges de liaison sont transmises comme une partie d'une trame de donnée qui est transmise en vue de la réception par le second dispositif (202).

4. Procédé selon la revendication 1, **caractérisé en ce que** les informations de marges de liaison comprennent des marges de liaison estimées à une ou plusieurs autres vitesses de transmission sans fil.

5. Procédé selon la revendication 1, **caractérisé en ce que** les informations de marges de liaison comprennent une estimée d'une vitesse de transmission optimale.

6. Procédé selon la revendication 1, **caractérisé en ce que** la présence d'informations de marges de liaison est indiquée par un bit dans l'en-tête MAC de la seconde trame (226).

7. Procédé selon la revendication 1, **caractérisé en ce que** la présence d'informations de marges de liaison est indiquée par une combinaison type/sous-type spécifique dans l'en-tête MAC de la seconde trame (226).

8. Procédé selon la revendication 2, **caractérisé en ce qu'**une partie au moins des informations de marges de liaison est comprise dans un champ de commande de trame de la trame ACK.

9. Procédé selon la revendication 2, **caractérisé en ce qu'**une partie au moins des informations de marges de liaison est comprise dans un champ de qualité de service (QoS) de la trame ACK.

10. Procédé selon la revendication 1, **caractérisé en ce que** lesdites plusieurs premières trames (220-224) sont transmises à une première puissance de transmission P₁, lequel procédé comprend en outre l'étape consistant à :
- recevoir, au niveau du premier dispositif sans fil (204), des trames supplémentaires (230-234) transmises par le second dispositif sans fil (202) à une seconde puissance de transmission P₂ inférieure à la première puissance de transmission P₁.

11. Procédé selon la revendication 1, **caractérisé en outre en ce que** le premier dispositif sans fil (204) détermine la marge de liaison globale et transmet des informations de marges de liaison en vue de la réception par le second dispositif sans fil (202) sans avoir reçu d'instruction de le faire dudit second dispositif sans fil (202).

12. Procédé selon la revendication 11, **caractérisé en ce que** le premier dispositif sans fil (204) détermine la marge de liaison globale et transmet des informations de marges de liaison en vue de la réception par le second dispositif sans fil (202) à un intervalle périodique régulier.

13. Procédé selon la revendication 11, **caractérisé en ce que** le premier dispositif sans fil (204) détermine la marge de liaison globale et transmet des informations de marges de liaison en vue de la réception par le second dispositif sans fil (202) à un intervalle sporadique.

14. Procédé selon la revendication 11, **caractérisé en ce que** le premier dispositif sans fil (204) détermine la marge de liaison globale et transmet des informations de marges de liaison en vue de la réception par le second dispositif sans fil (202) sur une base continue, de sorte qu'une marge de liaison globale mise à jour est rattachée à chaque trame transmise vers le second dispositif sans fil (202).

15. Procédé pour minimiser la puissance de transmission dans un réseau sans fil comprenant au moins un premier dispositif sans fil (202) et un second dispositif sans fil (204), lequel procédé comprend les étapes consistant à :
- transmettre plusieurs premières trames (220-224) depuis le premier dispositif sans fil (202) vers le second dispositif sans fil (204) ;
**caractérisé par** les étapes consistant à :
- recevoir au niveau du premier dispositif sans fil (202), une seconde trame (226) issue du second dispositif sans fil (204) en réponse auxdites plusieurs premières trames (220-224), la seconde trame (226) comprenant des informations de marges de liaison comprenant la marge de liaison globale desdites plusieurs premières trames (220-224) ; et
- abaisser successivement une puissance de transmission du premier dispositif sans fil (202) en fonction, en partie au moins, des informations de marges de liaison jusqu'à ce que le taux d'erreurs de paquets dépasse 10%.

16. Procédé selon la revendication 15, **caractérisé en ce que** la seconde trame (226) est une trame d'accusé de réception, ACK, accusant la réception d'une ou de plusieurs desdites plusieurs premières trames (220-224).

17. Procédé selon la revendication 16, **caractérisé en outre en ce qu'**il comprend une étape dans laquelle :
- le premier dispositif sans fil (202) transmet, à la puissance de transmission abaissée successivement, plusieurs premières trames supplémentaires (230-234) vers le second dispositif sans fil (204).

18. Procédé selon la revendication 15, **caractérisé en ce que** la marge de liaison globale comprend une moyenne mouvante des marges de liaison mesurée sur certaines desdites plusieurs premières trames (220-224) reçues du premier dispositif sans fil (202).

19. Procédé selon la revendication 16, **caractérisé en ce que** le premier dispositif sans fil (202) comprend au moins une première et une seconde antenne, et dans lequel l'abaissement successif de la puissance de transmission du premier dispositif sans fil (102) consiste à :
- abaisser successivement la puissance de transmission via la première antenne en fonction, en partie au moins, de la marge de liaison du second dispositif sans fil (104) jusqu'à ce que le taux d'erreurs de paquets dépasse 10% ; et
- ajuster séparément la puissance de transmission via la seconde antenne en fonction, en partie au moins, d'une marge de liaison reçue d'un point d'accès (106).

20. Procédé selon la revendication 15, **caractérisé en ce que** le premier dispositif sans fil (102) est en communication avec un point d'accès (106) et reçoit une indication d'informations de marges de liaison du point d'accès (106), et dans lequel l'abaissement successif de la puissance de transmission du premier dispositif sans fil (102) consiste à :
- abaisser successivement la puissance de transmission du premier dispositif sans fil (102) en fonction de la plus petite des informations de marges de liaison reçues du second dispositif sans fil (104) et du point d'accès (106) pour les communications avec le second dispositif sans fil (104) et le point d'accès (106) jusqu'à ce que le taux d'erreurs de paquets dépasse 10%.

21. Procédé selon la revendication 15, **caractérisé en outre en ce que** le second dispositif sans fil (202) détermine une marge de liaison globale et transmet des informations de marges de liaison en vue de la réception par le second dispositif sans fil sans avoir reçu d'instruction de le faire dudit premier dispositif sans fil (204).

22. Procédé selon la revendication 21, **caractérisé en ce que** le second dispositif sans fil (202) détermine la marge de liaison globale et transmet les informations de marges de liaison en vue de la réception par le premier dispositif sans fil (204) à un intervalle périodique régulier.

23. Procédé selon la revendication 21, **caractérisé en ce que** le second dispositif sans fil (202) détermine la marge de liaison globale et transmet les informations de marges de liaison en vue de la réception par le premier dispositif sans fil (204) à un intervalle sporadique.

24. Procédé selon la revendication 21, **caractérisé en ce que** le second dispositif sans fil (202) détermine la marge de liaison globale et transmet les informations de marges de liaison en vue de la réception par le premier dispositif sans fil (204) sur une base continue, de sorte qu'une marge de liaison globale mise à jour est rattachée à chaque trame transmise vers le premier dispositif sans fil (204).

25. Premier dispositif sans fil (204) pour minimiser la puissance de transmission dans un réseau sans fil comprenant au moins le premier dispositif sans fil (204) et un second dispositif sans fil (202), comprenant :
- un émetteur-récepteur (204B) ;
**caractérisé par** :
- un module de mesure de large de liaison (212) conçu pour déterminer une marge de liaison globale en partie au moins en calculant une moyenne mouvante de marges de liaison individuelles mesurée sur certaines plusieurs trames (220-224) reçues par l'émetteur-récepteur (204B) depuis le second dispositif sans fil (202) ; et
- un moyen pour émettre, via l'émetteur-récepteur (204B), des informations de marges de liaison comprenant la marge de liaison globale dans une seconde trame (226) en vue de la réception par le second dispositif sans fil (202).

26. Dispositif sans fil selon la revendication 25, **caractérisé en ce que** la seconde trame (226) est une trame d'accusé de réception.

27. Dispositif sans fil selon la revendication 26, **caractérisé en ce que** les informations de marges de liaison sont comprises dans un champ de qualité de service (QoS) de la trame d'accusé de réception.

28. Premier dispositif sans fil (204) selon la revendication 25, **caractérisé en ce que** le module de mesure de marge de liaison (212) est conçu pour déterminer la marge de liaison globale et pour que le moyen de transmission transmette les informations de marges de liaison au second dispositif sans fil (202) sans avoir reçu d'instruction de le faire dudit second dispositif sans fil (202).

29. Premier dispositif sans fil (204) selon la revendication 28, **caractérisé en ce que** le module de mesure de marge de liaison (212) est conçu pour déterminer la marge de liaison globale et pour que le moyen de transmission transmette les informations de marges de liaison au second dispositif sans fil (202) à un intervalle périodique régulier.

30. Premier dispositif sans fil (204) selon la revendication 28, **caractérisé en ce que** le module de mesure de marge de liaison (212) est conçu pour déterminer la marge de liaison globale et pour que le moyen de transmission transmette les informations de marges de liaison au second dispositif sans fil (202) à un intervalle sporadique.

31. Premier dispositif sans fil (204) selon la revendication 28, **caractérisé en ce que** le module de mesure de marge de liaison (212) est conçu pour déterminer la marge de liaison globale et pour que le moyen de transmission transmette les informations de marges de liaison au second dispositif sans fil (202) sur une base continue, de sorte qu'une marge de liaison globale mise à jour est rattachée à chaque trame transmise vers le second dispositif sans fil (202).

32. Premier dispositif sans fil (202) pour minimiser la puissance de transmission dans un réseau sans fil comprenant au moins le premier dispositif sans fil (202) et un second dispositif sans fil (204), comprenant :
- un émetteur-récepteur (204A) conçu pour émettre plusieurs premières trames (220-224) au second dispositif sans fil (204);
**caractérisé par** :
- un moyen pour recevoir une seconde trame depuis le second dispositif sans fil (204), la seconde trame comprenant des informations de marge de liaison comprenant la marge de liaison globale d'une desdites plusieurs trames (220-224) ; et
- un module d'ajustement de puissance de transmission (210) conçu pour abaisser successivement une puissance de transmission de l'émetteur-récepteur (204A) en fonction, en partie au moins, des informations de marges de liaison jusqu'à ce qu'un taux d'erreurs de paquets dépasse 10%.

33. Dispositif sans fil selon la revendication 32, **caractérisé en ce que** la seconde trame comprend une trame ACK (226).

34. Dispositif sans fil selon la revendication 33, **caractérisé en ce que** la marge de liaison est comprise dans un champ de qualité de service (QoS) de la trame ACK (226).

35. Dispositif sans fil selon la revendication 32, **caractérisé en ce que** l'émetteur-récepteur (204A) comprend une première et une seconde antenne, le moyen de transmission comprenant un moyen pour transmettre une ou plusieurs trames (220-224) vers le second dispositif sans fil (104) via la première antenne et un moyen pour transmettre une ou plusieurs trames vers un point d'accès (106) via la seconde antenne, et dans lequel le module d'ajustement de puissance de transmission (210) est en outre conçu pour :
- abaisser successivement une puissance de transmission via la première antenne en fonction, en partie au moins, des informations de marges de liaison du second dispositif sans fil (104) jusqu'à ce qu'un taux d'erreurs de paquets dépasse 10% ; et
- ajuster séparément la puissance de transmission via la seconde antenne en fonction, en partie au moins, d'une information de marge de liaison reçue d'un point d'accès (106).

36. Dispositif sans fil selon la revendication 32, **caractérisé en ce que** l'émetteur-récepteur (204A) est en outre conçu pour transmettre plusieurs autres premières trames (220-224) vers un point d'accès (106), dans lequel le moyen pour recevoir la seconde trame comprend un moyen pour recevoir une autre seconde trame depuis le point d'accès (106) et comprenant d'autres informations de marges de liaison du point d'accès (106), et dans lequel le module d'ajustement de puissance de transmission est en outre conçu pour :
- abaisser successivement la puissance de transmission du premier dispositif sans fil (102) en fonction de la plus petite des marges de liaison reçues du second dispositif sans fil (104) et du point d'accès (106) en vue de communications avec le second dispositif sans fil (104) et le point d'accès (106) jusqu'à ce qu'un taux d'erreurs de paquets dépasse 10%.
